# FASCICULE DE BREVET EUROPEEN

(11) **EP 2 864 216 B1**
(45) Date de publication et mention de la délivrance du brevet: **05.10.2016**
(21) Numéro de dépôt: 13715264.1
(22) Date de dépôt: 25.02.2013
(51) Int. Cl.: B65D 51/28

(54) **DISPOSITIF DISTRIBUTEUR MÉLANGEUR**
AUSGABE- UND MISCHVORRICHTUNG
DISPENSING AND MIXING DEVICE

(30) Priorité: 23.02.2012 FR 1251678
(43) Date de publication de la demande: 29.04.2015
(73) Titulaire: Moreau, Françoise, 33470 Gujan-Mestras (FR)
(72) Inventeur: Moreau, Françoise, 33470 Gujan-Mestras (FR)
(74) Mandataire: Le Forestier, Eric
(86) Numéro de dépôt international: PCT/FR2013/000053
(87) Numéro de publication internationale: WO 2013/124553

(56) Documents cités:
- EP-A1- 1 819 603
- WO-A1-2009/140855
- WO-A2-2011/046409
- JP-A- 2007 062 768
- US-A1- 2010 236 952
- US-A1- 2011 163 119

## Description

### Domaine de l'invention

L'invention concerne de manière générale un dispositif distributeur et mélangeur adapté pour être fixé sur une ouverture d'un récipient contenant un premier produit (typiquement un liquide) et distribuer puis mélanger un produit d'apport contenu dans un autre récipient, autonome, fabriqué et rempli séparément (du type capsule-dosette ou autre), avec un autre produit tel qu'un liquide, de la poudre, etc.

### Arrière-plan de l'invention

On connaît déjà de tels dispositifs distributeurs.

Par exemple, le document EP 2 239 205 décrit un tel dispositif pour pré-dosage, de type bouchon, comprenant un réservoir prévu pour être adapté sur une bouteille et comportant un fond pouvant être perforé, ainsi qu'un élément de perforation pour perforer le fond du réservoir et libérer le concentré dans la bouteille par appui sur le dispositif.

Le produit d'apport étant contenu dans le dispositif lui-même, ce système est à usage unique, et ne peut être aisément adapté à la réalisation d'un dispositif avec récipient autonome.

Les capsules-dosettes operculées jetables sont bien connues de l'art antérieur, surtout pour être utilisées pour la préparation de certaines boissons, notamment de café, et sont perforées de trous à la fois sur leur fond et leur ouverture operculée, pour permettre l'injection d'eau chaude sous pression à travers la capsule utilisée comme un filtre sans disperser le contenu, afin de réaliser l'infusion du contenu, grâce à une machine automatique électrique.

L'invention s'applique à de telles capsules-dosettes jetables operculées et à tout autre récipient operculé, qui permettent de doser et de conserver en général de façon hermétique des produits, destinés à être ouverts pour distribuer leur contenu dans un autre récipient et utiliser leur contenu pour faire des boissons ou préparations par association de différents produits ou mélanges de produits de façon mécanique et manuelle. WO 2009140855 décrit une telle capsule suivant la préambule de la revendication 13.

L'invention vise en particulier les modalités d'ouverture des opercules, en permettant l'ouverture mécanique d'un opercule fixé par thermoscellage sur l'ouverture d'un récipient pour libérer son contenu sans contact manuel direct avec l'opercule et l'ouverture ainsi protégée, alors que généralement un opercule collé ou thermoscellé est détaché manuellement du récipient en tirant sur sa languette latérale ou perforée et déchirée manuellement avec un couteau pour libérer le contenu du récipient et donc d'être en contact manuel direct avec l'ouverture du récipient servant de passage à son contenu.

Plus particulièrement, le document EP 1 819 603, représentant le préambule des revendications 1 et 12, décrit un dispositif de bouchon à capsule distributeur adapté pour être vissé sur le goulot d'une bouteille, comprenant un support de fixation, destiné à être vissé sur le goulot, et un capuchon adapté pour être vissé sur le support de fixation. Le capuchon, à double paroi, forme intérieurement une chambre apte à recevoir une capsule operculée, qui est bloquée par la combinaison d'un clippage sur la paroi interne du capuchon et d'un appui contre un dispositif au sommet du capuchon, permettant par ailleurs de libérer la capsule après usage, par pression. Le support de fixation comprend un élément coupant s'étendant en direction de la capsule et adapté pour découper l'opercule ainsi qu'un élément de retenue pour éviter que l'opercule ne tombe dans la bouteille après découpage.

Néanmoins, ce dispositif distributeur présente l'inconvénient d'être complexe à réaliser et à monter. Par ailleurs, la configuration centrale du dispositif de découpage et de l'élément de retenue entrave la communication entre l'intérieur de la capsule et l'intérieur de la bouteille après ouverture, ce qui peut faire obstacle à la circulation satisfaisante des produits pour faire un mélange complet. En outre, le dispositif distributeur gène pour verser le liquide une fois mélangé, de sorte qu'il est préférable de le retirer complètement pour se servir. Enfin la retenue de la capsule dans le capuchon impose une relation géométrique très particulière et précise entre la capsule et le capuchon.

### Résumé de l'invention

L'invention a pour objectif de proposer un dispositif distributeur mélangeur qui présente au moins l'un des avantages suivants :
- être réutilisable, avec ou sans couvercle,
- être simple à fabriquer et à utiliser,
- permettre, après l'ouverture mécanique du film de fermeture-opercule, de mélanger instantanément et facilement ensemble, sans interposition d'obstacles, le contenu d'un récipient autonome de type capsule-dosette ou pot ou bouteille ou autre, avec le contenu de préférence liquide d'un autre récipient récepteur de type bouteille,
- permettre de verser directement le fluide une fois mélangé, sans être démonté complètement pour permettre une utilisation ou consommation des produits mélangés, en général de façon immédiate.

A cet effet, l'invention propose un dispositif distributeur mélangeur tel que défini dans la revendication 1.

La présente invention propose également les caractéristiques optionnelles définies dans les revendications dépendantes 2 à 11.

L'invention propose également un élément d'assemblage tel que défini dans la revendication 12.

Selon un troisième aspect, on propose un récipient autonome tel que défini dans la revendication 13.

Des caractéristiques optionnelles du récipient sont définies dans les revendications 14 et 15.

### Brève description des dessins

D'autres caractéristiques, buts et avantages apparaîtront mieux à la lecture de la description détaillée qui va suivre, faite en référence aux figures annexées données à titre non limitatif et sur lesquelles :
La figure 1A est une vue éclatée d'un exemple d'une première forme de réalisation, avec couvercle, d'un dispositif distributeur conforme à l'invention vissé sur une bouteille ;
La figure 1B est une vue en coupe selon la ligne A-A de la figure 1A ;
La figure 2A est une vue assemblée de profil de l'exemple de réalisation des figures 1A et 1B ;
La figure 2B est une vue en coupe selon la ligne B-B de la figure 2A ;
La figure 3 est une vue partiellement en coupe d'un autre exemple de réalisation, sans couvercle, d'un dispositif distributeur conforme à l'invention, vissé sur une bouteille, adapté pour un récipient autonome avec filetage tel qu'une autre bouteille ;
La figure 4 est une vue partiellement en coupe d'un autre exemple de réalisation, toujours sans couvercle, d'un dispositif distributeur vissé sur une bouteille, adapté pour une capsule-dosette avec filetage ;

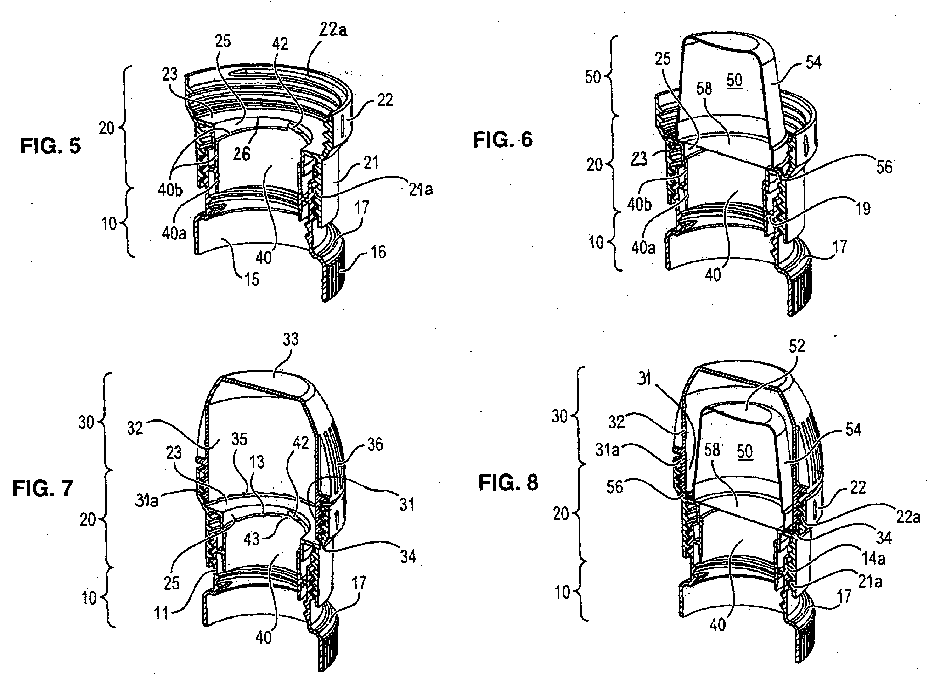

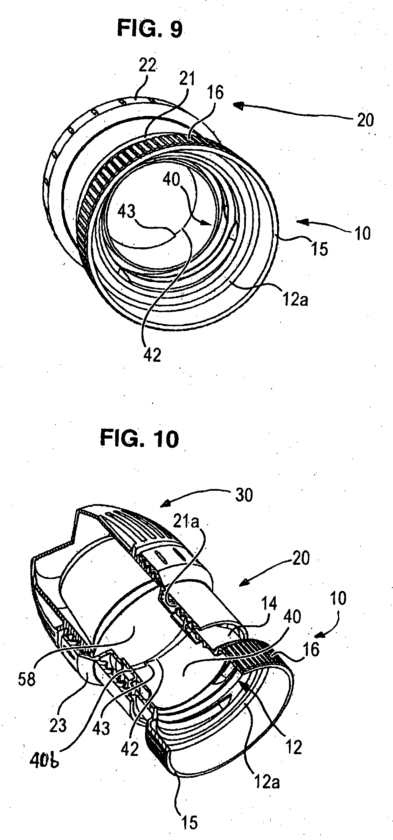

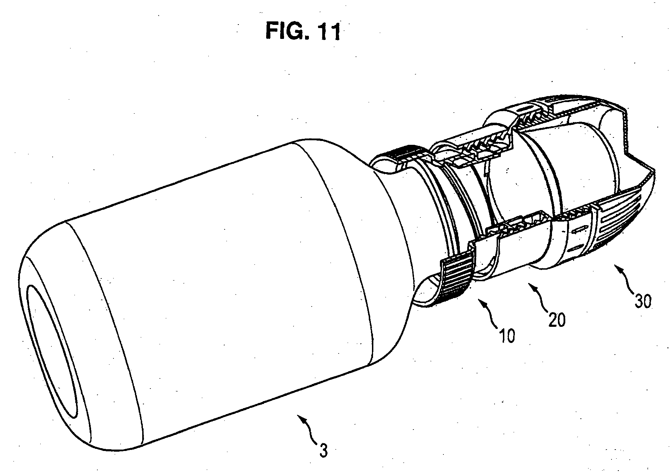

Les figures 5 à 11 sont des vues en perspective arrachées et sous différents angles de certaines parties du dispositif distributeur selon la première forme de réalisation ;
Les figures 12 et 13 sont des vues partiellement en élévation latérale et partiellement en coupe axiale de deux variantes de récipients autonomes aptes à participer à l'invention ; et
Les figures 14 à 16 sont des vues en coupe axiales de trois autres variantes de récipients autonomes aptes à participer à l'invention.

### Description détaillée de formes de réalisation préférées

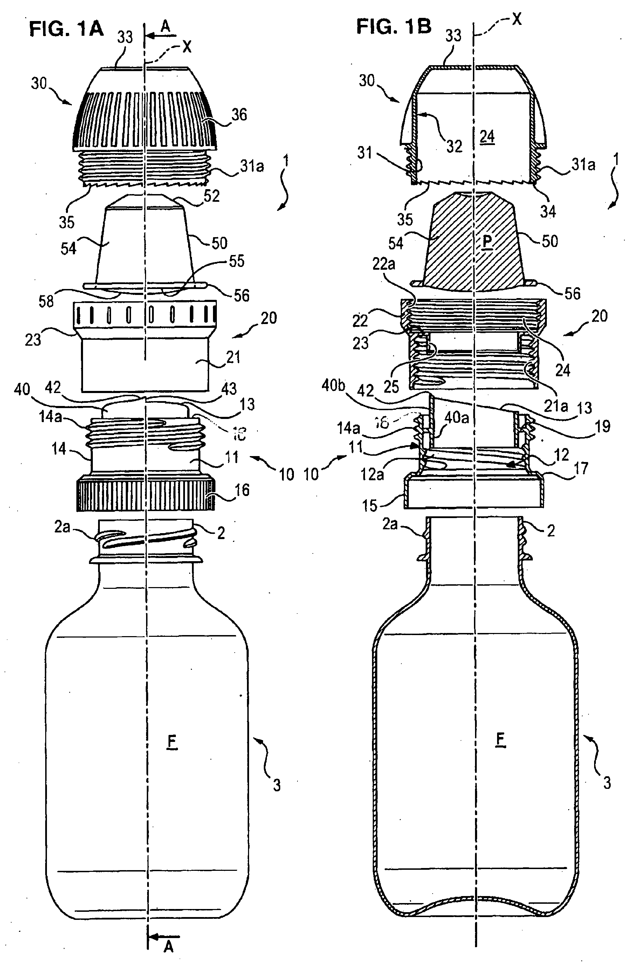

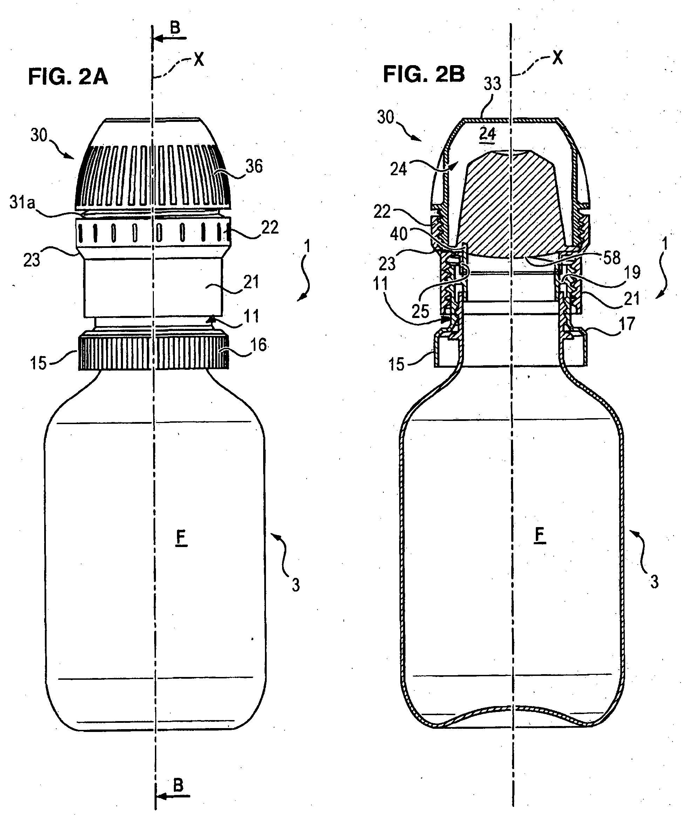

En référence d'abord aux figures 1A, 1B, 2A et 2B, un dispositif distributeur avec couvercle 1 selon l'invention est adapté pour être fixé sur une ouverture 2 d'un récipient récepteur 3. Il peut par exemple être vissé sur le goulot 2 d'une bouteille 3, telle qu'une bouteille d'eau, comme illustré sur les figures. Ceci n'est cependant pas limitatif, les dimensions et les moyens d'accostage du dispositif 1 pouvant être adaptés à d'autres types de récipients récepteurs, notamment des flacons, des bocaux, des bidons, des canettes, etc., par vissage, encliquetage, etc.

Dans cette première forme de réalisation, le dispositif 1 est adapté pour recevoir un récipient 50 autonome, à savoir fabriqué de façon séparée et indépendante du dispositif 1 et du récipient 3.

Le récipient autonome 50 est pré-rempli séparément d'une dose produit d'apport P à distribuer et à mélanger avec le contenu du récipient récepteur 3, par exemple un liquide ou autre fluide F, de la poudre, ou un mélange de ceux-ci. Il peut avoir la forme par exemple d'une capsule ou d'un pot, et il est adapté pour doser, conserver et stocker séparément et indépendamment du dispositif 1 le ou les produits d'apports P.

Le récipient autonome 50 présente un espace creux délimité par un fond 52, une paroi latérale périphérique 54 et une ouverture généralement circulaire 55 à l'opposé du fond, ouverture entourée par un bord plat périphérique 56 saillant radialement vers l'extérieur, sur la surface duquel est fixé périphériquement, de préférence par collage, thermoscellage, etc. le film de fermeture ou opercule 58 de préférence en feuille d'aluminium, de matériau composite ou tous autres matériaux compatibles. Ce film de fermeture peut être protégé par un organe de protection amovible tel qu'un film de protection détachable recouvrant le film 58, un couvercle à vis ou à clipper, une étiquette, un film ou manchon en matériau rétractable, les matériaux pour cet élément pouvant être variés (film métallique, plastique, papier ou composite, couvercle métallique ou en matière plastique, etc.). Cet organe de protection peut par ailleurs recevoir des informations sur le produit, typiquement par impression, ou encore des informations promotionnelles.

La paroi latérale périphérique est ici de forme généralement tronconique, l'ouverture 55 présentant un diamètre plus grand que celui du fond 52.

Cet exemple de réalisation n'est cependant pas limitatif, et d'autres formes de récipients autonomes 50 de type capsule ou autres, de taille et de volume variables et différents, peuvent être utilisés avec le dispositif distributeur 1.

Le récipient autonome peut être réalisé en matière plastique, en film métallique comme l'aluminium, en carton, en verre, ou encore dans une composition composite pouvant associer plusieurs matériaux par injection, thermoformage, injection-soufflage, etc. On peut également avoir recours à des biomatériaux pour tout ou partie du récipient autonome.

Le dispositif distributeur 1 destiné à recevoir une telle capsule 50 présente une direction principale s'étendant selon un axe longitudinal X et comprend :
- un élément d'assemblage 10,
- un élément d'accueil 20 pour la capsule 50,
- un couvercle creux de fermeture 30 (dont on verra plus loin qu'il est facultatif) apte à être ajusté sur l'élément 20, pour former conjointement avec lui une chambre d'accueil 24 pour la capsule 50.

L'élément d'assemblage 10 porte par ailleurs une partie de passage 40 qui d'une part forme un bec verseur et d'autre part porte un organe d'ouverture 42 pour le perçage, le déchirement et le dégagement de l'opercule 58 de la capsule 50.

Les éléments du dispositif peuvent être réalisés en matière plastique, par exemple par injection, chacun d'un seul tenant.

L'élément d'assemblage 10 est adapté pour être fixé sur le goulot 2 de la bouteille 3, en l'espèce par une bague extérieure 11 dont une zone inférieure est filetée (en 12a) sur la face interne 12 de façon complémentaire d'un filetage 2a du goulot 2. La zone supérieure sur la face externe 14 de la bague 11 est quant à elle filetée (en 14a) pour participer à l'accostage de l'élément d'accueil 20 sur l'élément d'assemblage 10.

La partie de passage 40 de l'élément d'assemblage 10 est ici réalisée sous la forme d'une bague intérieure légèrement tronconique et généralement lisse 40 reliée à la bague extérieure 11 par une membrure radiale 19 s'étendant à une hauteur intermédiaire entre ces deux bagues. Cette bague 40 d'une part forme un bec verseur au niveau de son bord supérieur en biseau 13, qui déborde au delà du bord supérieur 18 de la bague 11, et d'autre part comprend un outil ou organe 42 de perçage, de déchirement et de dégagement de l'opercule 58 de la capsule 50.

Plus précisément, le bord supérieur 13 en biseau de la bague 40 est doté d'une dent 42 saillante vers le haut à partir de la zone la plus haute dudit bord, comme le montre bien la figure 1A. Comme on le verra dans la suite, cette dent, par sa paroi verticale 43, est apte à découper périphériquement, avec effacement vers l'extérieur, ledit opercule 58 lors du vissage de l'élément 20 sur l'élément 10. Cette dent est ainsi excentrée par rapport à l'axe X, et le diamètre de la bague 40 la supportant est de préférence proche du diamètre de l'ouverture circulaire 55 de la capsule 50.

Il est à noter ici que les parties 40a et 40b de la bague intérieure 40 situées respectivement au-dessous et au-dessus de la membrure 19 forment toutes deux des jupes minces d'étanchéité destinées à venir coopérer respectivement avec le goulot 2 et avec une jupe 25 de l'élément d'accueil 20 comme on le verra en détail plus loin. Les surfaces extérieures des dites jupes 40a, 40b sont légèrement tronconiques, en se rétrécissant vers leur extrémité libre.

La membrure 19 qui relie l'élément d'assemblage 10 à la partie de passage 40 est ici continue sur toute sa circonférence et assure un hermétisme entre la partie basse et la partie haute de l'espace situé entre la bague extérieure 11 et la bague intérieure 40, de façon à participer à l'étanchéité du dispositif.

Dans une autre forme de réalisation, la coopération entre la bague 40 et le goulot 2 (en partie inférieure) et entre la bague 40 et la jupe 25 (en partie supérieure) peut s'effectuer de façon étanche (par exemple par emmanchement de formes légèrement tronconiques), et dans ce cas la membrure 19 n'a pas nécessairement à assurer une fonction d'étanchéité, auquel cas elle peut être discontinue.

En variante, on peut prévoir des moyens d'étanchéité spécifiques (joints intégrés à lèvre, anneaux élastomères rapportés, etc.) entre la bague 40 et le goulot 2 et/ou entre la bague 40 et la jupe 25 pour assurer cette étanchéité.

L'élément d'assemblage 10 comprend en outre à la base de la bague extérieure 11 une jupe 15 qui peut être de forme cylindrique de révolution ou non, et/ou présenter des striures 16 afin de faciliter la manipulation de l'élément d'assemblage 10 et son vissage sur le goulot 2 de la bouteille 3.

Ici, la jupe 15 est plus large que la bague 11 de manière à définir à leur transition un épaulement généralement radial 17.

On notera que l'élément de passage 40 du dispositif distributeur mélangeur 1, qui permet à la fois de perforer, déchirer et plier l'opercule 58 de la capsule grâce à son organe d'ouverture 42, et de faire office de bec verseur anti-goutte, n'est nullement limité à la forme de réalisation décrite ici d'un dispositif mélangeur comprenant un élément d'accueil et un couvercle, et peut être adapté sur tout autre dispositif distributeur ou bouchon ou capsule de fermeture.

L'élément de passage 40 pourvu de son organe d'ouverture 42 peut être utilisé pour ouvrir des films de fermeture et opercules de récipients associés avec d'autres dispositifs distributeurs ou bouchons ou capsules de fermeture et d'ouverture de récipient, en adaptant le dispositif d'assemblage avec l'élément de passage 40 pour que son biseau portant l'organe d'ouverture 42 soit situé soit en bas, côté récipient récepteur, soit en haut, côté récipient autonome, soit à la fois en bas et en haut.

Dans ce dernier cas, le dispositif de l'invention est apte à ouvrir et effacer un opercule aussi bien sur le récipient récepteur 3 que sur le récipient autonome, grâce à deux biseaux et de leurs dents respectives situés en opposition à chacune des extrémités de l'élément de passage 40. Naturellement, les configurations des organes d'ouverture respectifs peuvent être dans ce cas différentes et adaptées au type et au matériau de l'opercule ou autre film de fermeture et au type de récipient.

L'élément d'accueil 20 est en forme générale de bague et adapté pour être rapporté par vissage sur le filetage 14a de la bague 11 de l'élément d'assemblage 10. Il comprend à cet effet une embase 21 avec un filetage intérieur 21a complémentaire du filetage 14a. L'embase 21 se prolonge vers le haut par une partie d'accueil 22 de diamètre extérieur légèrement plus large et possédant un filetage intérieur 22a.

Une collerette rentrante 23 s'étend intérieurement à la transition entre l'embase 21 et la partie 22.

Le diamètre intérieur de la partie d'accueil 22 est légèrement supérieur au diamètre hors-tout du bord plat saillant 56 de la capsule pour permettre la mise en place de ladite capsule avec venue en appui dudit bord plat saillant 56 et de l'opercule 58 contre la collerette rentrante 23, avec centrage de l'ouverture circulaire 55 de la capsule par rapport à l'axe vertical longitudinal X. De préférence, la taille de la surface de la collerette rentrante 23 est voisine de celle du bord plat saillant 56 de la capsule de façon à bien supporter cette dernière sans empiéter sur son ouverture 55.

La collerette 23 se prolonge intérieurement par une jupe descendante continue et généralement cylindrique 25 d'axe X, destinée comme on le verra plus loin à coopérer en étanchéité avec la jupe supérieure 40b de la bague 40 de l'élément 10. L'arête interne 26 définie à la transition entre la collerette 23 et la jupe 25 est en outre dimensionnée pour être alignée coaxialement avec l'ouverture circulaire 55 de la capsule 50 lorsque celle-ci est positionnée dans l'élément 20, de manière à former un passage libre permettant la distribution et la circulation des produits entre la capsule 50 ouverte et la bouteille 3 à travers la bague 40 de l'élément d'assemblage 10 lorsque la bague 40 est introduite dans l'espace vide de l'embase 21 et celui de la partie d'accueil 22 au niveau de la collerette 23 lors du vissage de l'élément 20 sur l'élément 10.

Par ailleurs, la bague 40 et l'embase 21 et les filetages complémentaires 21 a et 14a sont dimensionnés de manière que le bord biseauté 13 de la bague 40 traverse l'espace défini à l'intérieur de la collerette 23 et la dépasse pour atteindre l'opercule 58 de la capsule 50 et l'ouvrir au niveau de l'ouverture circulaire 55 lors du vissage de l'élément 20 sur l'élément 10, comme on le verra en détail dans la suite.

Dans cette première forme de réalisation, le dispositif comprend en outre un élément de fermeture 30 formant couvercle creux amovible définissant avec les parties 22 et 23 de l'élément 20 la chambre d'accueil 24 de la capsule, mais ayant surtout pour fonction de retenir la capsule 50, axialement et contre la rotation, par rapport à l'élément d'accueil 20, en la bloquant contre la collerette 23.

Le couvercle 30 présente ici la forme générale d'une demi-sphère tronquée, et comprend une paroi latérale simple 32 et un fond 33, définissant, conjointement avec la partie d'accueil 22 de l'élément d'accueil 20 la chambre d'accueil 24 dont la base est formée par la collerette 23. Le couvercle 30 permet d'accéder à la chambre 24 et de remplacer la capsule 50 après usage.

Le couvercle 30 et la chambre d'accueil 24, qui sont cylindriques de révolution dans les formes de réalisation illustrées, peuvent avoir d'autres formes, telles qu'une forme carrée, rectangulaire, etc. pour pouvoir accueillir un récipient autonome 50 d'autres formes, par exemple comme de forme généralement carrée, rectangulaire, etc.

La forme et la taille du récipient autonome 50 sont libres et peuvent être différents de la forme et de la taille du couvercle 30 et de la chambre d'accueil 24, mais ce récipient doit bien entendu avoir des dimensions, en hauteur et/ou en largeur, en volume, inférieures à celles de la chambre d'accueil 24 pour permettre sa réception.

La paroi latérale 32, ici une paroi simple, présente une partie inférieure cylindrique 31 munie extérieurement d'un filetage 31a apte à coopérer avec le filetage 22a de l'élément 20. Le bord libre d'ouverture 34 inférieur de cette partie possède par ailleurs des griffes d'accrochage 35 aptes à venir en prise avec la surface opposée à l'opercule du bord plat 56 de la capsule 50, participant ainsi à son blocage en rotation.

En variante, le couvercle 30 pourrait également comprendre des moyens d'appui s'étendant verticalement depuis le fond 33 du couvercle agissant lors du vissage sur la région supérieure du corps de la capsule située du coté du fond 52 pour appliquer son bord plat 56 contre la collerette 23, tout en réalisant le blocage en rotation.

Selon une autre variante, on peut prévoir que le couvercle présente une double paroi, avec une paroi externe portant un filetage (interne ou externe) pour le vissage sur l'élément d'accueil 20, et une paroi interne apte à assurer la retenue du récipient autonome 50, le bord libre de cette paroi interne pouvant ou non être équipé de griffes d'accrochage.

La surface externe de la paroi 32 peut être striée (en 36), ou autrement aménagée, de manière à faciliter sa manipulation et son vissage.

De préférence, les vissages s'effectuent tous dans le même sens de façon à éviter le risque qu'un vissage donné induise un dévissage au niveau d'un autre des agencements à vis.

Le dispositif s'utilise tout d'abord en plaçant une capsule neuve 50 dans la chambre 24 et en vissant l'élément 30 sur l'élément 20. A la fin de ce vissage, les griffes 35 viennent progressivement s'accrocher dans le matériau relativement malléable du bord plat 56 de la capsule 50 et appuient ledit bord plat 56 contre la collerette rentrante 23, ce qui permet ainsi de bloquer la capsule en rotation et en translation par rapport à l'élément 20.

Par ailleurs, l'élément d'assemblage 10 est quant à lui monté par vissage sur le goulot de la bouteille 3. Lors de cette opération, la jupe inférieure 40a de la bague 40 de l'élément 10 vient progressivement s'engager dans une relation d'étanchéité avec la surface intérieure du goulot 2.

A l'étanchéité générale peuvent également contribuer de façon facultative les contacts sous pression entre le sommet du goulot 2 et la membrure 19, ainsi qu'au niveau du bord plat 56 de la capsule, comprimée entre le bord inférieur de la partie 31 du couvercle et la collerette 23.

Ensuite, l'ensemble formé par les éléments 20 et 30 est vissé sur l'élément d'assemblage 10 placé sur la bouteille 3. Au cours de ce vissage, la bague 40 franchit l'étendue de la collerette 23 pour rencontrer l'opercule 58 et la jupe 25 de l'élément 20 vient s'appuyer de façon continue et extérieurement contre la jupe supérieure 40b, formant aussi bec verseur, de la bague 40 de l'élément 10, ici encore dans une relation d'étanchéité.

Cette étanchéité est aussi assurée par la coopération des pas de vis 31a, 22a et 21a, 14a lorsqu'ils arrivent en butée sur la collerette 23 et l'épaulement 19.

De plus, les filetages 14a et 21a de la bague 11 et de l'embase 21 sont dimensionnés de sorte que lorsqu'une capsule 50 est disposée dans la partie d'accueil 22 contre la collerette 23 de l'élément d'accueil 20 et que ce dernier est vissé sur l'élément d'assemblage 10, la capsule 50 est déplacée verticalement vers la bas en tournant, conjointement avec la collerette 23, vers l'élément d'assemblage 10 et contre l'organe d'ouverture 42 pour permettre leur rencontre.

Durant ce mouvement, la forme de la dent 42 permet à la fois de perforer, de déchirer et de plier l'opercule 58. A cet effet, la paroi verticale 43 de la dent 42 est adaptée pour dégager l'ouverture circulaire 55 de la capsule 50 par pliage de la partie découpée de l'opercule 58 et aussi dégager le passage formé par la bague 40, et permettre ainsi de distribuer et mélanger le produit contenu dans la capsule 50 avec celui contenu dans le récipient 3 sans que le produit ne soit gêné par l'opercule 58.

Plus précisément, la paroi verticale 43 de la dent 42 oppose une résistance à la pression de l'opercule 58 pour déchirer et plier latéralement l'opercule 58 selon un arc de cercle centré sur l'axe X, jusqu'à ce que l'élément 20 arrive en butée contre l'élément d'assemblage 10.

On notera ici que le vissage de l'élément 20 sur l'élément 10 doit de préférence être limité afin que la dent 42 n'arrache pas entièrement l'opercule 58, qui serait alors susceptible d'obstruer partiellement le passage de communication entre l'intérieur de la capsule 50 et l'intérieur de la bouteille 3, voire de tomber au fond de la bouteille. Cette limitation du vissage peut être assurée principalement grâce à la course et à la dimension du filet 14a de la bague 11 et à la course et à la dimension du filet 21 a de l'embase 21, ainsi qu'à la hauteur de la jupe 25 et au dimensionnement de l'épaulement 19 et 23 servant de butée, de manière à obtenir le degré de rotation permettant une découpe de l'opercule 58 sans qu'elle se détache totalement de la capsule 50, soit par la venue en butée du sommet de la bague 11 contre le dessous de la collerette 23, soit par la venue en butée de la base de l'élément 20 contre l'épaulement 17 de l'élément 10.

La partie inférieure de la collerette 23 sert aussi de butée lors du vissage du filetage interne 21 a de l'embase 21 avec le filetage externe 14a de la bague 11, limitant ainsi la rotation de l'organe d'ouverture 42 de la bague 40 par rapport à l'élément 20 afin de découper suffisamment l'opercule 58 pour ouvrir la capsule 50 et permettre l'accès à son contenu, sans toutefois, comme on l'a dit, le découper entièrement et qu'il reste attaché à la capsule 50 sans risque qu'il ne tombe dans le récipient récepteur 3.

Préférentiellement, la course angulaire de la dent 42 par rapport à l'opercule dans son mouvement de déchirement de l'opercule s'étend sur un angle compris entre environ 180 et 340°.

On observe qu'à la fin de ces opérations, on a formé un espace interne constituant un passage généralement cylindrique, généralement lisse et généralement étanche, et non obstrué, entre l'espace intérieur de la capsule 50 et l'espace intérieur de la bouteille 3, ce qui garantit une excellente distribution de la dose contenue dans la capsule vers la bouteille 3 et réciproquement.

En utilisation, le dispositif distributeur mélangeur 1 de l'invention peut être mis en oeuvre selon le processus suivant :
a) placer une capsule neuve 50 dans la partie d'accueil 22 de la chambre d'accueil 24 de l'élément 20, en positionnant le bord externe 56 munie de l'opercule 58 en appui contre la collerette 23,
b) fermer l'élément 20 avec le couvercle creux amovible 30, par vissage ou encliquetage, de manière à fermer la chambre 24 et de bloquer la capsule 50 de manière étanche contre la collerette 23,
c) visser l'élément d'assemblage 10 sur le goulot 2 de la bouteille 3,
d) visser l'ensemble de l'élément 20 fermé par le couvercle 30 sur l'élément d'assemblage 10 jusqu'à arriver en butée.

L'opercule 58 est alors découpé par l'organe d'ouverture 42 de la bague 40, mais reste attaché à la capsule 50, et le produit P qu'elle contient tombe par gravité dans la bouteille 3. Afin de récupérer l'intégralité du produit P et de bien le mélanger au contenu de la bouteille 3, il suffit alors de retourner ou de secouer à plusieurs reprises la bouteille 3 munie du dispositif distributeur mélangeur 1, afin de remplir la capsule 50 avec le fluide F contenu dans la bouteille 3.

Après distribution et mélangeage, le mélange contenu dans la bouteille 3 peut être utilisé après avoir retiré par dévissage l'assemblage des pièces 10, 20 et 30, contenant la capsule 50. En variante, si on ne retire que les élément 20 et 30, la partie 40, encore présente au voisinage du goulot de la bouteille 3, peut faire office de bec verseur anti-goutte.

Selon une variante de réalisation, le couvercle 30 peut être accosté sur l'élément 20 autrement que par vissage, et notamment par clippage, le couvercle pouvant être distinct de l'élément 20 ou bien réalisé d'un seul tenant avec lui (par exemple relié à lui par une charnière-film, etc.).

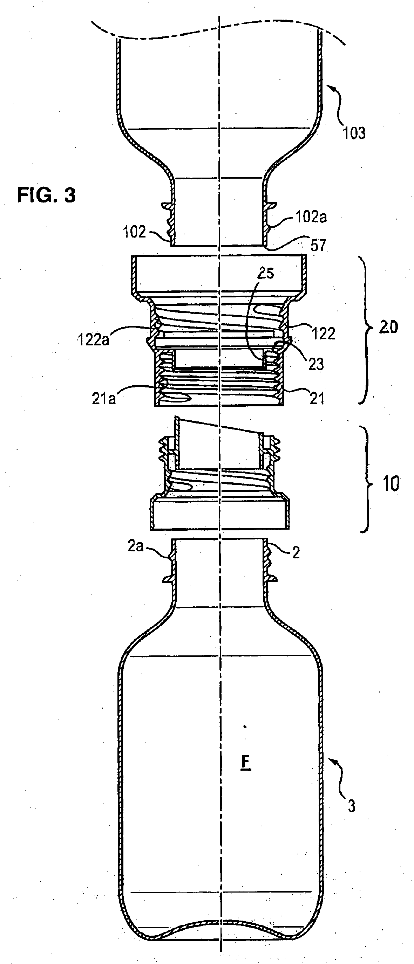

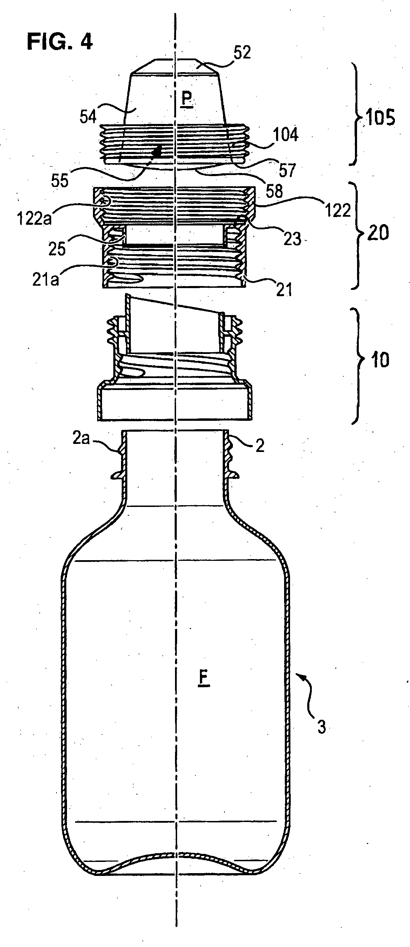

Selon une autre forme de réalisation, et maintenant en référence aux figures 3 et 4, le dispositif distributeur 1 peut être conçu pour être utilisé sans utilisation d'un couvercle 30, l'élément d'accueil 20 étant adapté pour accueillir non plus une capsule bloquée avec appui par un couvercle sur son bord plat saillant à plat contre une collerette, mais une autre forme de récipient autonome, en l'espèce doté d'un filetage de pas de vis, comme une autre bouteille dotée d'un goulot à vis (figure 3) ou une capsule-dosette à vis (figure 4) et dont, là encore l'ouverture est initialement fermée par un opercule (non représenté sur la figure 3), ou plus généralement tout récipient autonome operculé muni d'un filetage homologue et compatible avec celui prévu sur l'élément 20.

L'embase 21 de l'élément 20, y compris la collerette 23 et la jupe 25, sont ici identiques à celles décrites en référence à la première forme de réalisation.

En revanche, en référence à la figure 3, la partie d'accueil supérieure, notée 122, de l'élément 20, est ici adaptée pour recevoir par vissage le goulot à vis 102, operculé, munie d'un filetage 102a d'une bouteille 103, et comprend à cet effet un filetage interne 122a complémentaire. La surface du bord libre 57 de l'ouverture du goulot qui porte l'opercule 58 peut alors, à la fin du vissage, venir s'appuyer de façon généralement étanche contre la collerette rentrante 23.

Une fois cette opération effectuée, le dispositif se comporte de façon généralement identique à celui décrit précédemment lorsque l'ensemble formé par la bouteille 103 et l'élément d'accueil 20 est vissé sur l'élément d'assemblage 10 (identique à celui décrit précédemment) préalablement vissé sur la bouteille 3.

Dans la forme de réalisation de la figure 4, le récipient autonome 105 peut être muni d'un filetage 104 sur la paroi latérale externe 54, à proximité de l'ouverture circulaire 55 dont la surface du bord libre 57 d'ouverture permet de recevoir l'opercule 58.

La partie d'accueil supérieure 122 de l'élément 20 est alors adaptée pour recevoir par vissage la capsule-dosette à vis 105, operculée, telle que décrite ci-dessus et comprend à cet effet un filetage interne 122a complémentaire.

Par ce moyen de fixation, le récipient autonome 105 peut être vissé directement sur le dispositif distributeur mélangeur 1, le pas de vis 104 et la surface du bord libre d'ouverture 57, constituant la terminaison de la paroi latérale 54, assurant alors à la fin du vissage, par pression contre la collerette 23, l'étanchéité.

Une fois cette opération effectuée, le dispositif se comporte de façon généralement identique à celui décrit précédemment.

On notera que dans les formes de réalisation des figures 3 et 4, les filetages de tous les éléments participent à l'étanchéité de la partie supérieure du dispositif distributeur mélangeur 1 au niveau de la partie d'accueil 122 et de la collerette 23.

On notera en outre que selon ces formes de réalisation, le dispositif distributeur mélangeur 1 est ouvert dans sa partie supérieure. La chambre d'accueil 24 et le couvercle 30 n'existant plus, il est donc apte à recevoir tous types de récipients autonomes operculés 50, munis d'un filetage adapté et complémentaire à celui de l'élément d'accueil 20. Dans ce cas, la partie d'accueil supérieure 122, ouverte, peut recevoir avantageusement un film ou couvercle de protection fixé sur son bord libre, notamment pour protéger la collerette 23 et les autres parties des contaminations lors de la manutention et le stockage du dispositif.

Selon une autre variante non illustrée, on peut prévoir que le filetage soit prévu sur un prolongement vers le bas du récipient autonome, le film de fermeture étant fixé en retrait de ce prolongement, soit sur une collerette rentrante aménagée sur le récipient autonome, soit sur le bord libre d'un paroi interne du récipient, doublant sa paroi externe. Dans ce cas en particulier, le filetage du récipient autonome peut être externe ou interne.

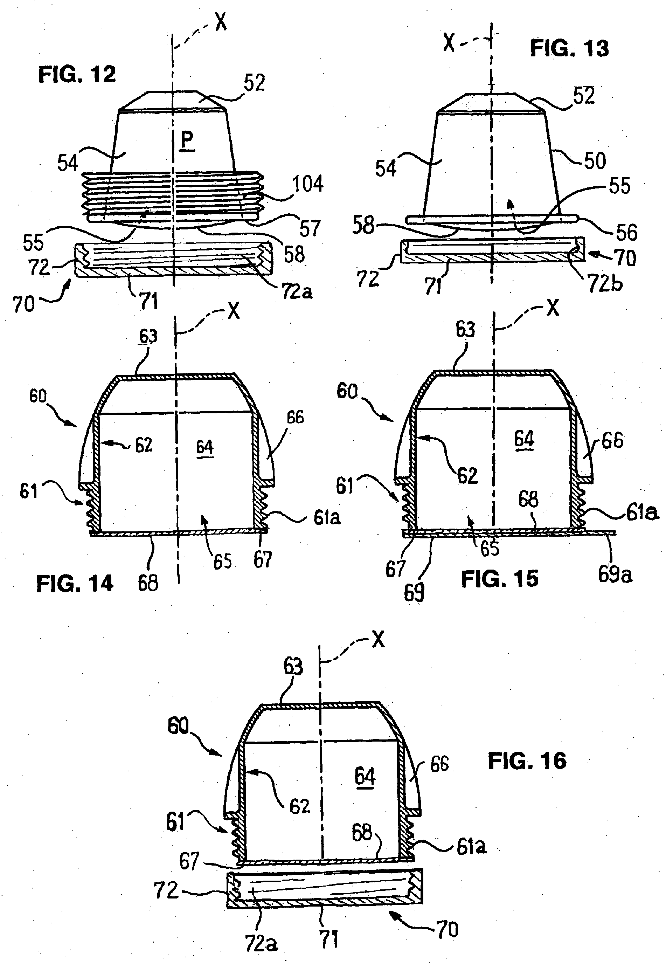

Les figures 12 à 16 présentent différentes variantes d'un récipient autonome apte à participer à l'invention.

Tout d'abord, la figure 12 illustre une variante de réalisation du récipient autonome 105 à embase filetée de la figure 4, dans laquelle un couvercle 70 possède une partie centrale 71 et une collerette périphérique axiale 72 filetée intérieurement en 72a pour s'accoster par vissage, temporairement, sur le filetage 104 du récipient 105.

Cette forme de réalisation est intéressante en ce qu'elle permet de protéger le récipient 105 et son opercule 58 pendant son transport et sa manutention, en évitant de percer accidentellement l'opercule 58. Elle trouve application lorsque le produit contenu dans le récipient présente une spécificité pharmacologique ou chimique nécessitant un degré de protection plus élevé, et/ou lorsque l'on souhaite éviter la contamination de l'opercule 58 par l'environnement extérieur, etc.

La figure 13 illustre une variante de réalisation du récipient 50 (version sans filetage) réalisée dans le même esprit, où le récipient est du type conventionnel en soi avec un bord plat saillant 56 sur lequel est rapporté l'opercule 58. Le couvercle 70 possède dans ce cas une partie centrale 71 et une collerette périphérique axiale 72 apte à venir s'engager avec retenue autour dudit bord 56.

Avantageusement, cette collerette possède intérieurement sur toute son étendue une rainure 72b apte à recevoir la région extérieure du bord plat saillant 56, pour réaliser une bonne retenue du couvercle. Le couvercle est dans ce cas réalisé en matériau (de préférence matière synthétique) suffisamment souple pour pouvoir le retirer.

La figure 14 illustre quant à elle une forme de réalisation où le récipient autonome, référencé 60, est réalisé de façon identique ou similaire au couvercle 30 de la forme de réalisation des figures 1A, 1B et 2A, 2B. On comprend que cette forme de réalisation, qui consiste essentiellement à remplacer la capsule 50 par l'enveloppe d'une pièce qui était précédemment un couvercle, permet de disposer d'un volume plus grand pour le produit à mélanger.

Le récipient 60 comprend une partie inférieure 61 généralement cylindrique et filetée extérieurement en 61 a au voisinage de son bord libre 67 entourant son ouverture, une paroi latérale 62, une paroi de fond 63, l'ensemble définissant un espace intérieur 64. On peut prévoir également des aménagements facilitant la préhension et la rotation, tels qu'une région supérieure striée ou cannelée 66. Comme pour le récipient 50 des formes précédentes, le récipient 60 est fermé par un opercule 68 apte à être déchiré par l'organe d'ouverture 42, de la même manière que précédemment.

Cet opercule est ici fixé par adhésion, de manière conventionnelle, sur le bord libre 67, généralement plat.

Si nécessaire, on peut adapter la géométrie (notamment diamètre) de la partie de passage 40 portant l'organe 42, étant donné que l'ouverture du récipient 60 est légèrement plus grande que celle du récipient 50 décrit précédemment.

La figure 15 illustre une variante de réalisation de la figure 14 où le récipient 60 est fermé par un double opercule ou autre double film, à savoir l'opercule de fermeture 68 précité et, par dessus, un opercule de protection 69 doté d'une languette latérale 69a permettant de le retirer manuellement avant usage du récipient avec le dispositif de l'invention. Cette amélioration permet d'éviter de contaminer l'opercule 68 par des agents extérieurs, qui sera au contact du produit final lors de la mise en oeuvre du dispositif. On notera que ce double operculage peut également être appliqué à une capsule-dosette sans filetage 50, ou avec filetage 105, et plus généralement à tout récipient autonome adapté pour être utilisé avec le dispositif de l'invention.

La figure 16 illustre quant à elle une autre variante où le récipient 60, généralement identique à celui de la figure 14, est complété par un couvercle de protection 70 sensiblement identique au couvercle 70 de la figure 12, de manière là encore à éviter de contaminer l'opercule avant usage.

D'autres moyens permettant de protéger l'opercule de fermeture 58 ou 68 et le cas échéant d'autres parties du récipient autonome 50, 60, 103 ou 105 peuvent être mis en oeuvre, en complément ou en remplacement des solutions décrites ci-dessus, et notamment le recours à un film de protection détachable recouvrant le film 58, un couvercle à clipper, une étiquette, un film ou manchon en matériau rétractable, les matériaux pour cet élément de protection pouvant être variés (film métallique, plastique, papier ou composite, couvercle métallique ou en matière plastique, etc.) et adaptés aux besoins.

Le récipient des figures 14 à 16, de par sa contenance plus grande, peut être particulièrement adapté à des applications telles que la préparation de biberons pour bébés, le récipient 60 contenant une dose de lait infantile en poudre adaptée à une certaine quantité d'eau préalablement versée dans le récipient final 3 (un biberon) et portée à la température adéquate.

Après mise en oeuvre du dispositif de l'invention, il suffit alors de dévisser le dispositif de l'invention et de le remplacer par une tétine.

La présente invention possède de nombreuses applications possibles et de nombreux avantages, comme développé ci-dessous.

Tout d'abord, grâce à l'étanchéité réalisée entre les deux récipients, et à un passage direct et non obstrué entre leurs espaces intérieurs après l'ouverture mécanique de l'opercule, il est possible d'utiliser un dispositif selon l'invention pour réaliser des dosages nécessitant une précision importante, par exemple lors de la dilution dans un solvant d'un médicament. Une capsule 50 contiendrait par exemple le médicament à mélanger, et la bouteille 3 de l'eau ou tout solvant pouvant servir de support pour son ingestion.

Il est aussi possible d'utiliser le dispositif de l'invention pour mélanger des produits chimiques dangereux avec une grande sécurité, sans risque de contact ou d'inhalation, lors de l'ouverture mécanique de l'opercule et du mélange des produits.

Il est par ailleurs possible d'utiliser le dispositif de l'invention pour associer et mélanger un ou plusieurs produits concentrés secs (typiquement en poudre ou en granulés), semi-liquides ou liquides contenus dans le récipient autonome 50, 60, 103 ou 105 par exemple des produits détergents, des sirops, des alcools, à un liquide contenu dans le récipient récepteur 3 comme de l'eau pour obtenir avec l'invention une dilution des produits concentrés.

De manière générale le dispositif de l'invention offre un moyen sécurisé et hygiénique d'ouverture des opercules des récipients operculés sans contact manuel direct et permettant de faire des mélanges sans risque de contact direct avec les produits contenus dans le récipient autonome 50, 60, 103, 105 et récepteur 3.

Il est en outre possible de délivrer successivement les doses de plusieurs capsules 50 d'un même produit P ou de produits différents P1, puis P2, puis P3, etc. dans une même bouteille 3 en remplaçant la capsule usagée par une nouvelle capsule. Pour cela, il suffit de dévisser l'élément 20 de l'élément 10, soit totalement, soit partiellement pour dégager suffisamment la dent 42 et la ramener nettement en dessous de la collerette 23, puis de dévisser le couvercle 30 pour enlever la capsule usagée et pour mettre en place une nouvelle capsule, de revisser le couvercle 30 et de revisser l'élément 20 sur l'élément 10 jusqu'à la butée de vissage, pour déchirer et effacer latéralement l'opercule 58 de la nouvelle capsule et délivrer le ou les produits P.

Dans le cas de l'utilisation du dispositif distributeur sans couvercle et l'utilisation des capsules-dosettes à vis 105 ou autres récipients autonomes à vis tels que 60, il suffit de dévisser l'élément 20 de l'élément 10, soit totalement, soit partiellement pour dégager suffisamment la dent 42 et la ramener nettement en dessous de la collerette 23, de dévisser le récipient fileté usagé pour l'enlever pour mettre en place un nouveau récipient à vis et le visser sur l'élément 20, et de revisser l'élément 20 sur l'élément 10 jusqu'à la butée de vissage, pour déchirer et effacer latéralement l'opercule du nouveau récipient à vis et délivrer le ou les produits P:

Le dispositif distributeur mélangeur 1 permet d'utiliser ou de consommer des produits instantanément, lesdits produits étant dosés, conservés et stockés dans des récipients autonomes fermés hermétiquement par un opercule, ce qui permet aux produits de garder leurs propriétés intrinsèques et leurs principes actifs intacts sans dégradation jusqu'à l'instant de leur utilisation avec le dispositif distributeur mélangeur pour réaliser l'ouverture de l'opercule et un mélange unique ou multiple seulement au moment de la consommation et permettre ainsi grâce à l'invention une utilisation immédiate et instantanée en fonction des besoins du moment.

On notera par ailleurs que l'invention peut être utilisée avec une grande variété de récipients. Ainsi, alors qu'on a décrit ci-dessus des réalisations où le récipient autonome est une capsule à bord plat ou à vis, ou une bouteille à goulot fileté, on pourrait prévoir par exemple le recours à une capsule ou tout autre récipient incorporant à sa périphérie un filetage, des moyens de clippage, etc.

Bien entendu, de nombreuses variantes et modifications peuvent être apportées à l'invention.

En particulier, la forme et les dimensions des différents éléments sauront être adaptés en fonction des différents besoins (types de récipients ou capsules, types d'opercules et leurs épaisseurs et matériaux, etc.).

Le dispositif est conçu pour être réutilisable et permettre un mélange simple ou des mélanges multiples, mais le dispositif distributeur mélangeur peut être aussi fabriqué et utilisé en usage unique jetable pré-assemblé avec un récipient autonome et un récipient récepteur, dans ce cas il pourra comporter une ou plusieurs bagues de garantie détachables ; en particulier, une bague de garantie détachable externe (non représentée) peut être incorporée entre la base de l'embase 21 de l'élément 20 et l'épaulement 17 de l'élément 10, une autre bague de garantie détachable (non représentée) peut être mise entre le bord supérieur externe de la partie d'accueil 22 et le bord externe inférieur fileté du couvercle 30 ou du récipient autonome 103 ou 105, et une bague de garantie détachable (non représentée) peut être aussi placée entre la base de la jupe 15 de l'élément 10 et le goulot 2 du récipient récepteur 3.

Une autre manière d'assurer une garantie d'inviolabilité avant usage unique ou premier usage est l'utilisation d'un manchon en film de matière plastique rétractable et détachable posé sur l'ensemble du dispositif pré-assemblé.

Ce dispositif distributeur mélangeur peut être utilisé pour l'usage et/ou la consommation de divers produits : des compléments alimentaires, des médicaments, notamment des préparations médicales extemporanées, des produits cosmétiques, des produits alimentaires notamment laits infantiles, des préparations stérilisées, des produits lyophilisés, des produits d'entretien, des produits chimiques, et plus généralement tous produits naturels ou synthétiques, etc.

Par ailleurs, la présente description s'étend à toute combinaison de caractéristiques originale, et notamment :
- la combinaison générale d'une capsule-dosette operculée jetable incluant un moyen de fixation par filetage, et d'un élément d'accueil doté d'un filetage homologue ; cet élément d'accueil peut être soit du type décrit plus haut, soit intégrée à une machine automatique de préparation de boissons ou de mélange de produits en utilisant le contenu de la capsule, telle qu'une machine à café, machine à préparer des boissons, machine à mélanger ;
- la perforation et le déchirement périphérique de l'opercule d'un récipient lors du vissage ensemble de deux éléments, l'un portent le récipient et l'autre portant un organe de perforation et de déchirement ;
- la combinaison générale d'une fonction de bec verseur et d'une fonction de déchirement d'opercule, lors d'un rapprochement par vissage d'un élément qui à la fois forme le bec verseur et inclut un organe d'ouverture 42, et d'un autre élément portant le récipient operculé, cette combinaison pouvant être soit du type décrit plus haut, soit intégrée à une machine automatique de préparation de boissons ou de mélange de produits.

## Revendications

1. Dispositif distributeur mélangeur (1) adapté pour être fixé sur une ouverture (2) d'un récipient récepteur (3), et destiné à recevoir un récipient autonome (50 ; 60 ; 103, 105) présentant une ouverture (55) fermée par un film de fermeture (58 ; 68) et contenant un produit d'apport (P) à distribuer dans l'espace intérieur du récipient récepteur (3) contenant un autre produit F, comprenant:
- un élément d'accueil (20) apte à recevoir et retenir le récipient autonome (50 ; 60 ; 103 ; 105) au niveau de son ouverture,
- un élément d'assemblage (10), adapté pour être fixé sur l'ouverture (2) du récipient récepteur (3) et pour recevoir par vissage ledit élément d'accueil, que ledit élément d'assemblage comportant une partie de passage (40) généralement lisse et dégagée apte à s'engager dans une partie homologue dudit élément d'accueil, ladite partie de passage (40) formant un bec verseur et intégrant un organe (42) d'ouverture du film de fermeture (58 ; 68) du récipient autonome (50 ; 60 ; 103 ; 105) en opposant une résistance au film de fermeture (58 ; 68) dans une région périphérique de celui-ci de manière à déchirer et dégager latéralement ledit film de fermeture au cours du vissage de l'élément d'accueil (20) sur l'élément d'assemblage (10), l'élément d'assemblage (10) et l'élément d'accueil (20) joints formant un volume intérieur constituant un passage généralement étanche et généralement lisse et dégagé entre l'espace intérieur du récipient récepteur (3) et l'espace intérieur du récipient autonome (50 ; 60 ; 103, 105) après dégagement du film de fermeture (58 ; 68).

2. Dispositif selon la revendication 1, dans lequel l'élément d'accueil (20) comprend une collerette rentrante (23) apte à recevoir en appui un bord (56, 57) de l'ouverture (55) du récipient autonome (50 ; 60 ; 103; 105), bord sur lequel est fixé le film de fermeture (58; 68), ladite collerette rentrante délimitant un espace ouvert dans la région centrale de l'élément d'accueil (20) et s'étendant entre un premier moyen de fixation pour recevoir un couvercle (30) ou un récipient autonome (50) et un deuxième moyen de fixation pour le montage sur l'élément d'assemblage (10).

3. Dispositif selon l'une des revendications 1 et 2, comprenant en outre un couvercle (30) apte à être engagé sur l'élément d'accueil (20) pour participer à la retenue du récipient autonome (50).

4. Dispositif selon l'une des revendications 1 et 2, dans lequel le récipient autonome (60 ; 103, 105) comprend au voisinage de son ouverture (55) un filetage permettant sa fixation par vissage sur une partie d'accueil (22 ; 122) de l'élément d'accueil (20) en fermant ledit élément d'accueil.

5. Dispositif selon l'une des revendications 1 à 4, dans lequel la partie de passage (40) est reliée à une partie périphérique (11) de l'élément d'assemblage par une partie de liaison (19) constituée par une membrure circonférentielle continue (19).

6. Dispositif selon l'une des revendications 1 à 5, dans lequel le bord (13) de la partie de passage (40) qui est tourné vers l'élément d'accueil (20) est biseauté et supporte l'organe d'ouverture (42) qui comprend une dent formée dans la région du sommet du biseau.

7. Dispositif selon l'une des revendications 1 à 6, dans lequel l'organe d'ouverture (42) est positionné de façon débordante par rapport au bord supérieur (18) de la partie périphérique (11) de l'élément d'assemblage (10).

8. Dispositif selon l'une des revendications 1 à 7, dans lequel ladite partie de passage (40) est apte à s'engager dans l'élément d'accueil (20) de manière que l'organe d'ouverture (42) déborde progressivement dans un espace de l'élément d'accueil (20) recevant le récipient autonome lors du vissage de l'élément d'accueil (20) sur l'élément d'assemblage (10).

9. Dispositif selon la revendication 1 à 8, dans lequel ladite partie de passage (40) forme deux jupes d'étanchéité, l'une (40a) apte à coopérer avec un goulot du récipient (2) et l'autre (40b) apte à coopérer avec une autre jupe (25) formée sur l'élément d'accueil (20).

10. Dispositif selon la revendication 2, dans lequel la partie de passage (40) de l'élément d'assemblage (10) présente une forme généralement cylindrique d'un diamètre légèrement inférieur à celui de l' espace intérieur ouvert de l'élément d'accueil (20) et voisin de celui de l'ouverture (55), généralement circulaire, du récipient autonome, de manière à déchirer le film de fermeture (58) au voisinage du bord de l'ouverture circulaire (55) au cours du déplacement dudit récipient autonome lors du vissage de l'élément d'accueil (20) sur l'élément d'assemblage (10).

11. Dispositif selon l'une des revendications 1 à 10, comprenant des moyens pour limiter le vissage de l'élément d'accueil (20) sur l'élément d'assemblage (10) de manière à contrôler la course du mouvement de déchirement du film de fermeture (58) par l'organe d'ouverture (42) et éviter le détachement total dudit film de fermeture.

12. Elément d'assemblage (10), adapté pour être fixé sur l'ouverture (2) d'un récipient récepteur (3) en vue de former un dispositif selon l'une des revendications 1 à 11, comprenant :
- un filetage (14a) pour la réception d'au moins un type de récipient autonome (50; 60; 103, 105) doté d'un film de fermeture (58 ; 68), soit directement, soit par l'intermédiaire d'un élément d'accueil (20) pour un tel récipient autonome,
- des moyens de fixation (12 ; 12a) pour sa fixation sur au moins un type de récipient récepteur,
- une partie de passage (40), **caractérisé en ce que** la partie de passage est généralement cylindrique, lisse et dégagée formant au moins un bec verseur et intégrant au moins un organe (42) d'ouverture du film de fermeture (58 ; 68) du récipient autonome (50 ; 60), la partie de passage (40) étant apte par ailleurs à s'appliquer intérieurement de façon étanche contre un goulot (2) dudit récipient récepteur.

13. Récipient autonome (105; 60) du type capsule-dosette notamment pour réaliser le dosage d'un produit d'apport (P) en vue de la préparation de boissons ou le mélange de produits, adapté notamment pour être rapporté sur l'élément d'accueil (20) d'un dispositif selon la revendication 1, comprenant un fond (52 ; 63), une paroi latérale (54 ; 64) se terminant par une ouverture (55) fermée par un film de fermeture (58 ; 68), **caractérisé en ce qu'**il est doté au niveau de ladite paroi latérale (54 ; 61, 62) au voisinage du film d'un filetage (104 ; 61 a) pour sa fixation par vissage.

14. Récipient autonome selon la revendication 13, dans lequel le filetage (104 ; 61a) est externe et prévu au voisinage d'une ouverture (55 ; 65) du récipient.

15. Récipient selon l'une des revendications 13 et 14, lequel comprend en outre un élément de protection secondaire (69 ; 70) recouvrant le film de fermeture (58 ; 68) de façon séparable de celui-ci.

## Patentansprüche

1. Misch- und Abgabevorrichtung (1), dafür eingerichtet, auf einer Öffnung (2) eines Aufnahmebehälters (3) befestigt zu werden und dazu bestimmt, einen gesonderten Behälter (50; 60; 103; 105) aufzunehmen, der eine mit einer Verschlussfolie (58; 68) verschlossene Öffnung (55) aufweist und einen Zusatzstoff (P) enthält, der in den Innenraum des Aufnahmebehälters (3) abzugeben ist, der einen anderen Stoff (F) enthält, umfassend:
- ein Aufnahmeteil (20), geeignet, den gesonderten Behälter (50; 60; 103; 105) im Bereich seiner Öffnung aufzunehmen und zu halten,
- ein Verbindungsmittel (10), geeignet, auf der Öffnung (2) des Aufnahmebehälters (3) befestigt zu werden und durch Aufschrauben das genannte Aufnahmeteil aufzunehmen, wobei das genannte Verbindungsmittel einen Durchgangsbereich (40) umfasst, der im Wesentlichen glatt und frei ist und geeignet ist, in einen entsprechenden Bereich des genannten Aufnahmeteils einzugreifen. Wobei der genannte Durchgangsbereich (40) einen Ausgießer bildet und ein Organ (42) zur Öffnung der Verschlussfolie (58; 68) des gesonderten Behälters (50; 60; 103; 105) umfasst, indem es der Verschlussfolie (58; 68) in einem Peripheriebereich derselben einen Widerstand bietet, derart dass es die genannte Folie beim Aufschrauben des Aufnahmeteils (20) auf das Verbindungsmittel (10) zerreißt und zur Seite räumt, wobei das Verbindungsmittel (10) und das Aufnahmeteil (20) gemeinsam nach Beseitigung der Verschlussfolie (58; 68) einen Innenraum bilden, der einen im Wesentlichen dichten und im Allgemeinen glatten und freien Durchgang zwischen dem Innenraum des Aufnahmebehälters (3) und dem Innenraum des gesonderten Behälters (50; 60; 103; 105) darstellt.

2. Vorrichtung nach Patentanspruch 1, in der das Aufnahmeteil (20) einen einspringenden Kragen (23) umfasst, der geeignet ist, anliegend einen Rand (56, 57) der Öffnung (55) des gesonderten Behälters (50; 60; 103; 105) aufzunehmen, Rand, auf dem die Verschlussfolie (58; 68) befestigt ist, wobei der genannte einspringende Kragen einen offenen Raum im mittleren Bereich des Aufnahmeteils (20) begrenzt und sich zwischen einem ersten Befestigungsmittel zur Aufnahme eines Deckels (30) oder eines gesonderten Behälters (50) und einem zweiten Befestigungsmittel zum Anbringen am Verbindungsmittel (10) begrenzt.

3. Vorrichtung nach irgendeinem der Patentansprüche 1 und 2, außerdem einen Deckel (30) umfassend, der geeignet ist, auf das Aufnahmeteil (20) gesetzt zu werden, um am Halten des gesonderten Behälters (50) mitzuwirken.

4. Vorrichtung nach irgendeinem der Patentansprüche 1 und 2, in der der gesonderte Behälter (60; 103; 105) nahe seiner Öffnung (55) ein Gewinde aufweist, das seine Befestigung durch Aufschrauben auf ein Verbindungsteil (22; 122) des Aufnahmeteils (20) erlaubt und damit das genannte Aufnahmeteil verschließt.

5. Vorrichtung nach irgendeinem der Patentansprüche 1 bis 4, in der der Durchgangsbereich (40) mit einem peripheren Bereich (11) des Verbindungsmittels durch einen Verbindungsteil (19) verbunden ist, der in einer durchgehenden Umfangsgurtung (19) besteht.

6. Vorrichtung nach irgendeinem der Patentansprüche 1 bis 5, in der der Rand (13) des Durchgangsteils (40), der dem Aufnahmeteil (20) zugewandt ist, abgefast ist und das Öffnungsorgan (42) trägt, das einen Zahn aufweist, der im Bereich des Scheitels der Fase geformt ist.

7. Vorrichtung nach irgendeinem der Patentansprüche 1 bis 6, in der das Öffnungsorgan (42) über den oberen Rand (18) des peripheren Bereichs (11) des Verbindungsmittels (10) hinausragend angeordnet ist.

8. Vorrichtung nach einem der Patentansprüche 1 bis 7, in der der genannte Durchgangsbereich (40) geeignet ist, ins Aufnahmeteil (20) derart einzugreifen, dass das Öffnungsorgan (42) zunehmend in einen Raum des Aufnahmeteils (20) ragt, der den gesonderten Behälter beim Aufschrauben des Aufnahmeteils (20) auf das Verbindungsmittel (10) aufnimmt.

9. Vorrichtung nach irgendeinem der Patentansprüche 1 bis 8, in der der genannte Durchgangsbereich (40) zwei Dichtungsschürzen bildet, von denen die eine (40a) geeignet ist, mit einem Hals des Behälters (2) zusammenzuwirken, und die andere (40b) geeignet ist, mit einer anderen Schürze (25) zusammenzuwirken, die auf dem Aufnahmeteil (20) geformt ist.

10. Vorrichtung nach Patentanspruch 2, in der der Durchgangsbereich (40) des Verbindungsmittels (10) eine im Allgemeinen zylindrische Form aufweist mit einem geringfügig geringeren Durchmesser, als dem des offenen Innenraumes des Aufnahmeteils (20) und nahe dem der im Allgemeinen kreisförmigen Öffnung (55) des gesonderten Behälters, derart dass die Verschlussfolie (58) im Laufe der Versetzung des genannten gesonderten Behälters beim Aufschrauben des Aufnahmeteils (20) auf das Verbindungsmittel (10) nahe dem Rand der kreisförmigen Öffnung (55) zerrissen wird.

11. Vorrichtung nach irgendeinem der Patentansprüche 1 bis 10, Mittel zur Begrenzung des Aufschraubens des Aufnahmeteils (20) auf das Verbindungsmittel (10) umfassend, um den Verlauf der Zerreißbewegung des Verschlussfilms (58) durch das Öffnungsorgan (42) zu steuern und die vollständige Ablösung der genannten Verschlussfolie zu vermeiden.

12. Verbindungsmittel (10), geeignet, auf der Öffnung (2) eines Aufnahmebehälters (3) befestigt zu werden, um eine Vorrichtung nach einem der Patentansprüche 1 bis 11 zu bilden, umfassend:
- ein Gewinde (14a) zur Aufnahme mindestens einer Art eines mit einer Verschlussfolie (58; 68) versehenen gesonderten Behälters (50; 60; 103; 105), entweder unmittelbar oder über ein Aufnahmeteil (20) für einen derartigen gesonderten Behälter,
- Befestigungsmittel (12; 12a) zu seiner Befestigung auf mindestens einer Art Aufnahmebehälter,
- einen Durchgangsbereich (40), **dadurch gekennzeichnet, dass** der Durchgangsbereich im Allgemeinen zylindrisch, glatt und frei ist und mindestens einen Ausgießer bildet und mindestens ein Organ (42) zur Öffnung der Verschlussfolie (58; 68) des gesonderten Behälters (50; 60) umfasst, wobei der Durchgangs-bereich (40) außerdem geeignet ist, sich innen dicht an einen Hals (2) des genannten Aufnahmebehälters anzulegen.

13. Gesonderter Behälter (105; 60) vom Typ Dosiskapsel, insbesondere zur Dosierung eines Zusatzstoffes (P) zur Bereitung eines Getränkes oder der Mischung von Stoffen, insbesondere dafür eingerichtet, auf das Aufnahmeteil (20) einer Vorrichtung nach Patentanspruch 1 aufgesetzt zu werden, einen Boden (52; 63) umfassend, eine Seitenwand (54; 64), die in einer Öffnung (55) endet, die durch eine Verschlussfolie (58; 68) verschlossen ist, **dadurch gekennzeichnet, dass** er im Bereich der genannten Seitenwand (54; 61, 62) nahe der Verschlussfolie (104; 61 a) zu seiner Befestigung durch Aufschrauben mit einem Gewinde (104; 61 a) versehen ist.

14. Gesonderter Behälter nach Patentanspruch 13, in dem das Gewinde (104; 61 a) ein Außengewinde ist und nahe einer Öffnung (55; 65) des Behälters vorgesehen ist.

15. Behälter nach einem der Patentansprüche 13 und 14, der außerdem ein zweites Schutzmittel (69; 70) umfasst, das die Verschlussfolie (58; 68) in von dieser trennbarer Weise abdeckt.

## Claims

1. A mixing and dispensing device (1) adapted for attachment to an opening (2) of a receiving container (3), and intended to receive a stand-alone container (50; 60; 103, 105) having an opening (55) sealed with a sealing film (58; 68) and containing an add-on product (P) to be dispensed into the interior of the receiving container (3) containing another product F, comprising:
- a receiving element (20) adapted to receive and retain the stand-alone container (50; 60; 103, 105) at its opening,
- a connecting element (10), adapted for attachment to the opening (2) of the receiving container (3) and for receiving said receiving element by screwing, **characterized in that** said connecting element has a generally smooth and unobstructed passage portion (50) adapted for engagement into a homologous portion of said receiving element, said passage portion (40) forming a spout and incorporating a member (42) for opening the sealing film (58; 68) of the stand-alone container (50; 60; 103, 105) by providing opposing resistance to the sealing film (58; 68) in a peripheral region thereof so as to tear and laterally clear said sealing film during the screwing of the receiving element (20) onto the connecting element (10), the joined connecting element (10) and receiving element (20) forming an interior volume that constitutes a generally tight and generally smooth and unobstructed passage between the interior of the receiving container (3) and the interior space of the stand-alone container (50; 60; 103, 105) after clearing the sealing film (58; 68).

2. A device according to claim 1, wherein the receiving element (20) comprises a re-entrant flange (23) capable of receiving in a bearing relation an edge (56, 57) of the opening (55) of the stand-alone container (50; 60; 103, 105), the sealing film (58; 68) being attached to said edge, said re-entrant flange delimiting an open space in the central region of the receiving element 20) and extending between a first securing means for receiving a cover (30) or a stand-alone container (50) and a second securing means for mounting onto the connecting element.

3. A device according to claim 1 or 2, further comprising a cover (30) for engagement on the receiving element (20) for contributing to retaining of the stand-alone container (50).

4. A device according to claim 1 or 2, wherein the stand-alone container (60; 103, 105) comprises, adjacent its opening (55) a screw thread for the screw-mounting thereof on a receiving portion (22; 122) of the receiving element (20) while closing said receiving element.

5. A device according to one of claims 1 to 4, wherein said passage portion (40) is connected to a peripheral portion (11) of the connecting element by a connecting portion (19) made of a continuous circumferential wall (19).

6. A device according to one of claims 1 to 5, wherein the edge (13) of the passage portion (40) facing the receiving element (20) is bevelled and carries the opening member (42), the latter comprising a tooth formed in the apical region of the bevel.

7. A device according to one of claims 1 to 6, wherein the opening member (42) protrudes relative to the upper edge (18) of the peripheral portion (11) of the connecting element (10).

8. A device according to one of claims 1 to 7, wherein said passage portion (40) is capable of entering the receiving element (20) so that the opening member (42) progressively protrudes into a space of the receiving element (20) that receives the stand-alone container when screwing the receiving element (20) onto the connecting element (10).

9. A device according to one of claims 1 to 8, wherein said passage portion (40) forms two sealing skirts, one (40a) being adapted to cooperate with a neck of the container (2) and the other (40b) being adapted to cooperate with another skirt (25) formed on the receiving element (20).

10. A device according to claim 2, wherein the passage portion (40) of the connecting element (10) has a generally cylindrical shape with a diameter slightly smaller than that of the internal open space of the receiving element (20) and close to that of the generally circular opening (55) of the stand-alone container, in order to tear the sealing film (58) adjacent to the edge of the circular opening (55) during movement of said stand-alone container when the receiving element (20) is screwed onto the connecting element (10.

11. A device according to one of claims 1 to 10, comprising means for limiting the screwing of the receiving element (20) onto the connecting element (10) so as to control the flight of the tearing movement of the sealing film (58) by the opening member (42) and prevent the total detachment of said sealing film.

12. A connecting element (10), adapted for attachment to the opening (2) of a receiving container (3) in order to form a device according to one of claims 1 to 11, comprising:
- a screw thread (14a) for receiving at least one type of a stand-alone container (50; 60; 103, 105) provided with a sealing film (58; 68), either directly or via a receiving element (20) for such a stand-alone container,
- attachment means (12; 12a) for attachment of the element to at least one type of a receiving container,
- a generally cylindrical, smooth, unobstructed and spout-forming passage portion (40) incorporating at least one member (42) for opening the sealing film (58; 68) of the stand-alone container (50; 60; 103, 105), the passage portion being further adapted for sealingly bearing inside a neck (2) of said receiving container.

13. A stand-alone pod-type/capsule type container (105; 60) in particular for dosing an add-on product (P) in order to prepare beverages or to mix products, adapter in particular for attachment to the receiving element (20) of a device according to claim 1, comprising a bottom (52; 63), a sidewall (54; 64) ending at an opening (55) closed by a sealing film (58; 68), **characterized in that** it is provided at said side wall (54; 61, 62) adjacent to the film with a screw thread (104; 61 a) for its screwing attachment.

14. A stand-alone container according to claim 13, wherein the screw thread (104; 61 a) is external and provided adjacent to an opening (55; 65) of the container.

15. A container according to claim 13 or 14, further comprising a secondary protective member (69; 70) covering the sealing film (58; 68) in a manner separable therefrom.
